(19) Europäisches Patentamt
European Patent Office
Office européen des brevets

(11) **EP 2 791 494 B1**

(12) **EUROPÄISCHE PATENTSCHRIFT**

(45) Veröffentlichungstag und Bekanntmachung des Hinweises auf die Patenterteilung:
**23.03.2016 Patentblatt 2016/12**

(51) Int Cl.:
***F02D 41/14*** *(2006.01)*

(21) Anmeldenummer: **12799066.1**

(22) Anmeldetag: **05.12.2012**

(86) Internationale Anmeldenummer:
**PCT/EP2012/005003**

(87) Internationale Veröffentlichungsnummer:
**WO 2013/087159 (20.06.2013 Gazette 2013/25)**

(54) **SCHÄTZVERFAHREN DER TOTZEIT EINES LAMBDASENSORS EINER ABGASREINIGUNGSEINRICHTUNG**

ESTIMATION METHOD OF THE DEAD TIME OF A LAMBDA SENSOR OF AN EXHAUST GAS CLEANING DEVICE

MÉTHODE D'ESTIMATION DU TEMPS-MORT D'UN CAPTEUR LAMBDA D'UN DISPOSITIF D'ÉPURATION DES GAZ D'ÉCHAPPEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.12.2011 DE 102011121099**

(43) Veröffentlichungstag der Anmeldung:
**22.10.2014 Patentblatt 2014/43**

(73) Patentinhaber: **Audi AG**
**85045 Ingolstadt (DE)**

(72) Erfinder: **ODENDALL, Bodo**
**85101 Lenting (DE)**

(56) Entgegenhaltungen:
**DE-A1-102008 041 797     DE-A1-102008 042 549**
**US-A1- 2005 216 175      US-A1- 2008 189 008**
**US-A1- 2011 283 981**

- **M. Schlup: "Exponentialfunktion", , 8. Januar 2004 (2004-01-08), XP055056298, Zürcher Hochschule Winterthur Gefunden im Internet: URL:https://home.zhaw.ch/~spma/Scripts/ET_ST/EL2/Theorie/EL2_Th6_A4%20expFkt.pdf [gefunden am 2013-03-13]**

**Beschreibung**

Die Erfindung betrifft ein Verfahren zum Betreiben einer Abgasreinigungseinrichtung mit wenigstens einem Katalysator zum Filtern von Abgas und mit zumindest einer in dem Abgas angeordneten Lambdasonde, wobei ein einem Maximum beziehungsweise Minimum eines von der Lambdasonde gelieferten, verzögerten Signalwerts zugeordnetes Zeitraumende bestimmt wird, indem ein Variablenwert dem Signalwert nachgeführt und bei einem Unterschreiten beziehungsweise Überschreiten des Variablenwerts durch den Signalwert um einen bestimmten Differenzwert das Zeitraumende festgestellt wird. Die Erfindung betrifft weiterhin eine Abgasreinigungseinrichtung.

Verfahren der eingangs genannten Art sind aus dem Stand der Technik bekannt. Sie dienen dem Betreiben der Abgasreinigungseinrichtung. Diese verfügt über den wenigstens einen Katalysator, welcher dem Filtern von Abgas dient und beispielsweise einem Abgastrakt einer Brennkraftmaschine zugeordnet ist. Der Katalysator wird also mit von der Brennkraftmaschine erzeugtem Abgas beaufschlagt. Neben dem Katalysator verfügt die Abgasreinigungseinrichtung über die wenigstens eine Lambdasonde, welche derart angeordnet ist, dass sie von dem Abgas überströmt wird. Die Lambdasonde kann dabei beispielsweise stromaufwärts oder stromabwärts des Katalysators angeordnet sein.

Die Offenlegungsschrift DE 10 2008 042 549 A zeigt ein Verfahren und eine Vorrichtung zur Diagnose der Anstiegsgeschwindigkeit und der Totzeit einer Abgassonde, und zeigt alle Merkmale des Oberbegriffes der unabhängigen Ansprüche.

Zur Verbrennung von Kraftstoff in der Brennkraftmaschine ist für eine bestimmte Menge des Kraftstoffs eine bestimmte Menge eines Oxidators notwendig. Als Oxidator wird üblicherweise der in der Umgebungsluft vorhandene Sauerstoff verwendet. Das Verhältnis der tatsächlich in die Brennkraftmaschine beziehungsweise deren wenigstens eine Brennkammer eingebrachte Luftmenge zu einem theoretischen Luftbedarf wird als Lambdawert (A) bezeichnet. Bei A = 1 wird der Brennkraftmaschine eine Luftmenge zugeführt, welche für die Verbrennung optimal ist. Ist die Brennkraftmaschine als Otto-Brennkraftmaschine ausgeführt, so erreicht sie ihre höchste Leistung jedoch bei Luftmangel, also bei etwa $0{,}9 \leq \lambda \leq 1$. Der geringste Kraftstoffverbrauch wird durch die Brennkraftmaschine dagegen bei etwa 10 % Luftüberschuss (entsprechend A = 1,1) erreicht.

Der Katalysator dient dem Umwandeln von in dem Abgas enthaltenen Schadstoffen in für die Umgebung des Kraftfahrzeugs weniger schädliche Produkte. Zur zuverlässigen Funktion des Katalysators ist es jedoch notwendig, den Sauerstoffanteil in dem Abgas zu bestimmen. Zu diesem Zweck ist die Lambdasonde vorgesehen. Der von der Lambdasonde gelieferte Signalwert gibt an, in welchem Maße das in den Brennräumen der Brennkraftmaschine vorliegende Kraftstoff-Luft-Gemisch verbrennt. Insbesondere zur Durchführung einer Diagnose der Lambdasonde und/oder des Katalysators ist es notwendig, den Zeitraum zu bestimmen, welcher nach einer Änderung des Verhältnisses zwischen Kraftstoff und Luft des in die Brennkraftmaschine eingebrachten Kraftstoff-Luft-Gemischs und der entsprechenden Veränderungen des von der Lambdasonde gelieferten Signalwerts liegt. Dies ist insbesondere dann von Bedeutung, wenn gleichzeitig die Diagnose des Katalysators und die Diagnose der Lambdasonde durchgeführt werden sollen. Bei einer Veränderung des Kraftstoff-Luft-Gemischs in Richtung mager ($\lambda$ wird kleiner) wird zu diesem Zweck das Maximum des von der Lambdasonde gelieferten Signalwerts beziehungsweise der diesem zugeordnete Zeitpunkt bestimmt. Entsprechend wird bei einer Veränderung des Kraftstoff-Luft-Gemischs in Richtung fett ($\lambda$ wird größer) das Minimum beziehungsweise der diesem zugeordnete Zeitpunkt bestimmt. Die Zeitpunkte definieren das Ende des Zeitraums, welcher beispielsweise zwischen dem Zeitpunkt des Einstellens des neuen Kraftstoff-Luft-Gemischs und dem dem Maximum beziehungsweise Minimum des Signalwerts zugeordneten Zeitpunkt liegt.

Um das Zeitraumende zu bestimmen, wird dem Signalwert der Variablenwert nachgeführt und bei einem Unterschreiten beziehungsweise Überschreiten des Variablenwerts durch den Signalwert um den bestimmten Differenzwert das Zeitaumende festgestellt, also auf den momentanen Zeitpunkt festgesetzt. Das Nachführen des Variablenwerts erfolgt derart, dass der Variablenwert stets das Maximum beziehungsweise Minimum des Signalwerts darstellt. Der Variablenwert wird also gleich dem Signalwert gesetzt, wenn der Signalwert den bisherigen Variablenwert übersteigt beziehungsweise unter diesen fällt. Dies wird für jeden von der Lambdasonde gelieferten Signalwert oder zumindest in bestimmten Zeitintervallen durchgeführt. Unterschreitet beziehungsweise überschreitet der Signalwert den Variablenwert, also das bisher vorliegende Maximum, um den Differenzwert, so kann darauf geschlossen werden, dass das Zeitraumende vorliegt. Der Differenzwert kann jedoch nicht zu gering gewählt werden, weil der Signalwert stets Schwankungen beziehungsweise Signalrauschen unterworfen ist, welche bei einem zu kleinen Differenzwert zu einer Fehlerkennung des Zeitraumendes führen könnten. Bedingt durch den Differenzwert, welcher ausreichend groß gewählt sein muss, kann es unter Umständen dazu kommen, dass das Zeitraumende zu einem Zeitpunkt erkannt wird, welcher nach dem tatsächlich vorliegenden Zeitraumende liegt. Dies ist insbesondere dann der Fall, wenn der von der Lambdasonde gelieferte Signalwert verzögert ist. Eine solche Verzögerung des von der Lambdasonde gelieferten Signals kann beispielsweise durch die Übertragung des Signals von der Lambdasonde zu einem Steuergerät bedingt sein, in welchem die Auswertung des Signals beziehungsweise des Signalwerts durchgeführt wird.

Es ist daher Aufgabe der Erfindung, ein Verfahren zum Betreiben einer Abgasreinigungseinrichtung vorzuschlagen, welches den genannten Nachteil nicht aufweist, sondern insbesondere eine genauere Bestimmung des Zeitraumendes ermöglicht.

Dies wird erfindungsgemäß mit einem Verfahren mit den Merkmalen des Anspruchs 1 erreicht. Dabei ist vorgesehen, dass das Zeitraumende aufgrund der Zeitkonstante der Verzögerung korrigiert wird. Es ist also vorgesehen, das Zeitraumende zunächst gemäß der vorstehend beschriebenen Vorgehensweise zu bestimmen. Anschließend wird die Zeitkonstante der Verzögerung ermittelt. Dann wird das Zeitraumende mit Hilfe dieser Zeitkonstante korrigiert, sodass der Einfluss der Verzögerung zumindest teilweise, vorzugsweise vollständig, ausgeglichen wird. Die Geschwindigkeit, mit welcher der Signalwert abfällt hängt insbesondere von den Katalysatoreigenschaften, der Anströmung der Lambdasonde mit Abgas und der Geometrie eines Schutzrohrs für die Lambdasonde ab, welches verhindert, dass die Lambdasonde unmittelbar von dem Abgas angeströmt wird. Je größer der Differenzwert beispielsweise aufgrund von Rauschen oder sonstigen Einflüssen auf den Signalwert gewählt werden muss, umso größer kann unter Umständen die Abweichung des festgestellten Zeitraumendes und dem tatsächlich vorliegenden Zeitraumende sein. Diese Abweichung kann mit Hilfe der vorstehend beschriebenen Verfahrensweise vermindert werden. Die Zeitkonstante kann beispielsweise konstant gewählt sein. Besonders bevorzugt ist es jedoch, sie aus dem Signalwert beziehungsweise dessen Verlauf über der Zeit zu bestimmen. Auf diese Weise kann die Zeitkonstante an die momentanen Betriebsbedingungen der Abgasreinigungseinrichtung und beispielsweise eine Alterung der Lambdasonde angepasst werden. Derartige Einflüsse können entsprechend nahezu vollständig ausgeglichen werden.

Zusätzlich oder alternativ können selbstverständlich auch mehrere Lambdasonden vorgesehen sein, wobei eine Lambdasonde stromaufwärts des Katalysators und eine weitere Lambdasonde stromabwärts des Katalysators in dem Abgas angeordnet ist. Bei einer solchen Anordnung soll beispielsweise der Zeitraum bestimmt werden, welcher zwischen dem Zeitpunkt, an welchem mittels der stromaufwärts liegenden Lambdasonde das Maximum beziehungsweise Minimum des entsprechenden Signalwerts festgestellt wird, und dem Zeitpunkt, an welchem das Maximum beziehungsweise Minimum des Signalwerts der stromabwärts gelegenen Lambdasonde auftritt, liegt. Ebenso kann es selbstverständlich vorgesehen sein, dass für jede der Lambdasonden der Zeitraum zwischen dem Einstellen des neuen Kraftstoff-Luft-Gemischs an der Brennkraftmaschine und dem Auftreten des Maximums beziehungsweise Minimums des jeweiligen Signalwerts festgestellt wird.

Eine Weiterbildung der Erfindung sieht vor, dass der Signalwert durch ein Filtern, eine Anordnung der Lambdasonde in dem Abgas und/oder den Katalysator verzögert wird. Das Filtern ist beispielsweise vorgesehen, um das Rauschen des von der Lambdasonde gelieferten Signalwerts zu vermindern und einen glatten Verlauf des Signalwerts sicherzustellen. Auf diese Weise kann eine zuverlässigere Auswertung des Signalwerts erfolgen. Dabei tritt jedoch die Verzögerung des Signalwerts auf, welche unter Umständen dazu führen kann, dass das tatsächlich vorliegende Zeitraumende von dem festgestellten Zeitraumende abweicht, insbesondere zeitlich gesehen vor diesem liegt. Die Verzögerung kann ebenso durch die Anordnung der Lambdasonde beeinflusst werden, beispielsweise wenn das Abgas nach dem Einstellen des neuen Kraftstoff-Luft-Gemischs strömungstechnisch bedingt verzögert die Lambdasonde erreicht. Dies kann insbesondere durch das eingangs erwähnte Schutzrohr der Fall sein. Auch der Katalysator verzögert - bei stromabwärts desselben angeordneter Lambdasonde - selbstredend den Signalwert.

Eine Weiterbildung der Erfindung sieht vor, dass die Zeitkonstante aus der Steigung des Signalwerts bestimmt wird. Wie vorstehend bereits ausgeführt, ist es vorteilhaft, wenn die Zeitkonstante aus dem Signalwert beziehungsweise dessen Verlauf ermittelt wird. Es ist nun vorgesehen, dass die Steigung des Signalwerts über der Zeit bestimmt wird und aus der somit vorliegenden positiven oder negativen Steigung auf die Zeitkonstante geschlossen wird. Die Steigung kann insbesondere aus der Ableitung des Signalwerts bestimmt werden. Alternativ kann sie jedoch auch aus zwei in einem bestimmten zeitlichen Abstand liegenden Signalwerten, insbesondere unter Anwendung der entsprechenden Geradengleichung, ermittelt werden. Beispielsweise wird die Steigung des Signalwerts permanent bestimmt und der Maximalwert der Steigung zur Bestimmung der Zeitkonstante herangezogen. Der Maximalwert ist dabei insbesondere ein lokaler Maximalwert, welcher in einem bestimmten Zeitraum vor dem Zeitraumende auftritt. Das bedeutet, dass der Maximalwert der Steigung nach dem Feststellen des Zeitraumendes beziehungsweise nach dem Korrigieren des Zeitraumendes zurückgesetzt und anschließend neu bestimmt wird, also für jeden Zeitraum individuell festgelegt wird. Beispielsweise wird der Maximalwert der Steigung bei Auftreten des Zeitraumanfangs zurückgesetzt, also beispielsweise zu dem Zeitpunkt, an welchem ein neues Kraftstoff-Luft-Gemisch an der Brennkraftmaschine eingestellt wird oder das Maximum beziehungsweise Minimum von einer stromaufwärts der Lambdasonde liegenden weiteren Lambdasonde festgestellt wird. Die vorstehenden Ausführungen sind für einen Minimalwert der Steigung analog heranzuziehen.

Erfindungsgemäß wird ein Korrekturwert für das Zeitraumende aus dem Differenzwert und der Zeitkonstante bestimmt. Sowohl der Differenzwert, bei dessen Unterschreiten beziehungsweise Überschreiten durch den Variablenwert das Zeitraumende festgestellt wird, als auch die Zeitkonstante sind maßgeblich für die Abweichung bei der Erkennung des Zeitraumendes. Sie sollen insoweit beide in die Bestimmung des Korrekturwerts einfließen, mittels welchem das Zeitraumende nach dem Feststellen korrigiert wird. Beispielsweise wird der Korrekturwert zu dem festgestellten Zeitraumende addiert beziehungsweise von diesem subtrahiert, um das korrigierte Zeitraumende zu erhalten. Beispielsweise ist es vorgesehen, dass sich der Korrekturwert aus dem Differenzwert multipliziert mit der Zeitkonstante ergibt. Wird der Signalwert durch ein Filtern verzögert, so kann ein Verlauf des Signalwerts $\lambda$ über der Zeit t durch die Beziehung

$$\lambda(t) = \lambda_0 e^{\frac{\bar{}}{\tau}}$$

dargestellt werden, wobei $\lambda_0$ beispielsweise gleich Eins ist. Beispielsweise anhand dieser Beziehung kann die Zeitkonstante $\tau$ ermittelt werden. Anschließend ergibt sich der Korrekturwert $\Delta t$ für das Zeitraumende aus der Beziehung

$$\Delta t = \Delta\lambda \cdot \tau .$$

Eine Weiterbildung der Erfindung sieht vor, dass als Lambdasonde eine binäre Lambdasonde verwendet wird. Grundsätzlich kann jede beliebige Lambdasonde verwendet werden, also auch eine Breitband-Lambdasonde. Besonders bevorzugt wird jedoch die binäre Lambdasonde eingesetzt, welche lediglich in einem sehr schmalen Bereich von Lambda arbeitet. Sie zeigt insbesondere lediglich an, ob Lambda größer als 1 oder kleiner als 1 ist. Die binäre Lambdasonde kann auch als Spannungssprungsonde bezeichnet werden.

Die Erfindung betrifft weiterhin eine Abgasreinigungseinrichtung, insbesondere zur Durchführung des Verfahrens gemäß den vorstehenden Ausführungen, mit wenigstens einem Katalysator zur Filterung von Abgas und mit zumindest einer in dem Abgas angeordneten Lambdasonde, wobei Mittel vorgesehen sind, um ein einem Maximum beziehungsweise Minimum eines von der Lambdasonde gelieferten, verzögerten Signalwerts zugeordnetes Zeitraumende zu bestimmen, indem ein Variablenwert dem Signalwert nachgeführt und bei einem Unterschreiten beziehungsweise Überschreiten des Variablenwerts durch den Signalwert um einen bestimmten Differenzwert das Zeitraumende festgestellt wird. Dabei sollen die Mittel zusätzlich dazu vorgesehen sein, das Zeitraumende aufgrund der Zeitkonstante der Verzögerung zu korrigieren. Die Abgasreinigungseinrichtung beziehungsweise das angewandte Verfahren kann gemäß den vorstehenden Ausführungen weitergebildet sein.

Die Erfindung wird nachfolgend anhand der in der Zeichnung dargestellten Ausführungsbeispiele näher erläutert, ohne dass eine Beschränkung der Erfindung erfolgt. Dabei zeigen:

Figur 1    eine schematische Darstellung eines Bereichs einer Abgasreinigungseinrichtung mit einem Katalysator und zwei Lambdasonden,

Figur 2    ein Diagramm, in welchem ein von einer der Lambdasonden geliefertes Signal über der Zeit aufgetragen ist, und

Figur 3    ein Diagramm, in welchem die Signale von zwei Lambdasonden über der Zeit aufgetragen sind.

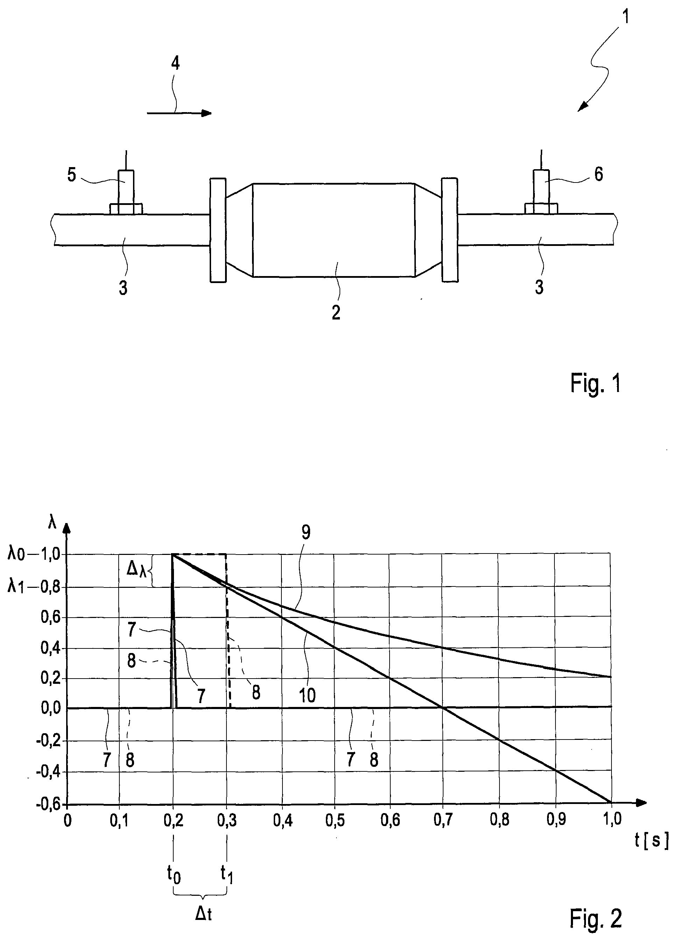

Die Figur 1 zeigt eine schematische Darstellung einer Abgasreinigungseinrichtung 1 mit einem Katalysator 2, welcher in einer Abgasleitung 3 angeordnet ist. Die Abgasleitung 3 ist an eine hier nicht dargestellte Brennkraftmaschine angeschlossen und wird bei deren Betrieb in Richtung des Pfeils 4 von Abgas der Brennkraftmaschine durchströmt. In der Abgasleitung 3 sind zwei Lambdasonden 5 und 6 vorgesehen, wobei die Lambdasonde 5 stromaufwärts des Katalysators 2 und die Lambdasonde 6 stromabwärts von diesem angeordnet ist. Jede der Lambdasonden 5 und 6 kann entweder als Breitbandlamdasonde oder als binäre Lambdasonde beziehungsweise Spannungssprungsonde ausgeführt sein. Die Lambdasonde 5 wird als Regelungslambdasonde verwendet, dient also dem Einstellen des Verhältnisses zwischen Kraftstoff und Luft des der Brennkraftmaschine zugeführten Kraftstoff-Luft-Gemischs. Die Lambdasonde 6 dient dagegen als Monitorsonde und wird dazu verwendet, die Funktion des Katalysators 2 zu überwachen. Bei einem Betrieb der Abgasreinigungseinrichtung 1 kann nun der von der Lambdasonde 5 gelieferte Signalwert mit dem der Lambdasonde 6 verglichen werden. Bei einem vollständig funktionsfähigen Katalysator 2 erfolgt eine verzögerte Reaktion der Lambdasonde 6 gegenüber der Lambdasonde 5. Der Abstand zwischen den beiden Reaktionen der Lambdasonden 5 und 6 verkürzt sich jedoch, wenn der Katalysator 2 seine Speicherfähigkeit verliert, beispielsweise aufgrund von Alterung. Alternativ kann die Lambdasonde 6 auch zur Verbesserung der Regelung der Kraftstoff- und Luftanteile des Kraftstoff-Luft-Gemischs herangezogen werden. Auch eine Plausibilisierung der von der Lambdasonde 5 gelieferten Signalwerte mittels den in der Lambdasonde 6 oder umgekehrt ist vorstellbar.

Die Brennkraftmaschine kann entweder mit einem mageren ($\lambda>1$), stöchiometrischen (A=1) oder fetten ($\lambda<1$) Kraftstoff-Luft-Gemisch betrieben werden. Wird an der Brennkraftmaschine ein anderes Kraftstoff-Luft-Gemisch eingestellt, erfolgt insbesondere ein Wechsel von einem fetten zu einem mageren Gemisch oder umgekehrt, so soll beispielsweise für die Lambdasonde 6 der Zeitraum bestimmt werden, um welchen die Reaktion der Lambdasonde 6 gegenüber diesem Einstellen verzögert ist.

Zu diesem Zweck wird aus dem von der Lambdasonde 6 gelieferten Signalwert, welcher üblicherweise verzögert einem Steuergerät zugeführt wird, mittels welchem der Zeitraum beziehungsweise dessen Zeitraumende ermittelt wird, bei einem Maximum beziehungsweise Minimum des Signalwerts das zugeordnete Zeitraumende bestimmt. Zu diesem Zweck wird ein Variablenwert dem Signalwert nachgeführt und bei einem Unterschreiten beziehungsweise Überschreiten des Variablenwerts durch den Signalwert um einen bestimmten Differenzwert das Zeitraumende festgestellt. Wie vorstehend bereits angeführt, kann das auf diese Weise festgestellte Zeitraumende jedoch von einem tatsächlich vorliegenden Zeitraumende abweichen. Dies ist insbesondere durch die Verzögerung des Signalwerts und die Größe des bestimmten Differenzwerts begründet. Aus diesem Grund soll nach dem Feststellen des Zeitraumendes dieses aufgrund der Zeitkonstante der Verzögerung korrigiert werden.

Wird der Signalwert durch ein Filtern verzögert, so folgt der Signalwert dem Verlauf

$$\lambda(t) = \lambda_0 e^{\frac{t}{\tau}}$$

Dabei ist t die verstrichene Zeit, $\tau$ die Zeitkonstante und $\lambda_0$ ein Ausgangswert, der beispielsweise gleich Eins ist. Die Ableitung dieses Verlaufs wird durch die Beziehung

$$\frac{d\lambda(t)}{dt} = -\frac{1}{\tau} e^{-\frac{t}{\tau}}$$

wiedergegeben. Die Maximalableitung des Signalwerts $\lambda(t)$ liegt zum Zeitpunkt t = 0 s vor und wird durch

$$\left(\frac{d\lambda}{dt}\right)_{max} = -\frac{1}{\tau}$$

wiedergegeben. Entsprechend kann die Zeitkonstante $\tau$ aus dieser Maximalableitung beziehungsweise der (vorzugsweise maximalen) Steigung des Variablenwerts $\lambda(t)$ bestimmt werden.

Aus der Zeitkonstante kann nun ein Korrekturwert $\Delta t$ für das Zeitraumende bestimmt werden. Dabei gilt beispielsweise

$$\Delta t = \Delta\lambda \cdot \tau \,,$$

wobei der bestimmte Differenzwert $\Delta\lambda$, welcher auch zum Feststellen des Zeitraumendes verwendet wird, herangezogen wird.

Das beschriebene Verfahren soll anhand des Diagramms der Figur 2 erläutert werden. In dem Diagramm ist das Luftverhältnis $\lambda$ beziehungsweise der entsprechende Signalwert der Lambdasonde 6 über der Zeit t aufgetragen. Ein Verlauf 7 gibt dabei den tatsächlichen Verlauf des Luftverhältnisses wieder. Weil der Signalwert jedoch verzögert ist, ergibt sich der Verlauf 8, welcher dem Verlauf 7 in zeitverzögerter Form entspricht. Der von der Lambdasonde 6 gelieferte Signalwert wird durch ein Filtern verzögert, sodass er gemäß dem Verlauf 9 verläuft. Das tatsächliche Zeitraumende liegt also bei dem Zeitpunkt $t_0$ = 0,2 s. Weil der Signalwert der Lambdasonde 6 verzögert ist und das Zeitraumende erst festgestellt wird, wenn der Signalwert den Variablenwert, welcher hier $\lambda_0$ = 1 entspricht, um den bestimmten Differenzwert $\Delta\lambda$ = 0,2 unterschreitet, wird das Zeitraumende erst zum Zeitpunkt $t_1$ = 0,3 s festgestellt. Es wird nun der maximale Wert der Ableitung

$$\frac{d\lambda}{dt}$$

herangezogen, um das festgestellte Zeitraumende zu korrigieren. Der maximale Wert

$$\left(\frac{d\lambda}{dt}\right)_{max}$$

der Ableitung beziehungsweise die Maximalableitung liegt zum Zeitpunkt $t_0$ vor. Der Verlauf 10 gibt diese Maximalableitung wieder.

Aus der Maximalableitung beziehungsweise der Steigung ergibt sich gemäß den vorstehenden Ausführungen die Zeitkonstante $\tau = 0,5$, weil die Maximalableitung beziehungsweise die Maximalsteigung gemäß dem Verlauf 10 den Wert -2 annimmt. Der Korrekturwert für das festgestellte Zeitraumende beträgt nun

$$\Delta t = \Delta\lambda \cdot \tau = 0,2 \cdot 0,5 = 0,1s.$$

Mit diesem Wert wird das festgestellte Zeitraumende korrigiert, sodass sich anstelle des festgestellten Zeitraumendes $t_1$ das tatsächliche Zeitraumende $t_0$ ergibt. Insoweit wird die Bestimmung des Zeitraumendes mit Hilfe des vorstehend beschriebenen Verfahrens deutlich verbessert. Beispielsweise entspricht die Steigung der Maximalableitung des Verlaufs der Signalswerte. Sie kann jedoch auch aus zwei mit einem bestimmten zeitlichen Abstand gewählten Signalwerten berechnet werden.

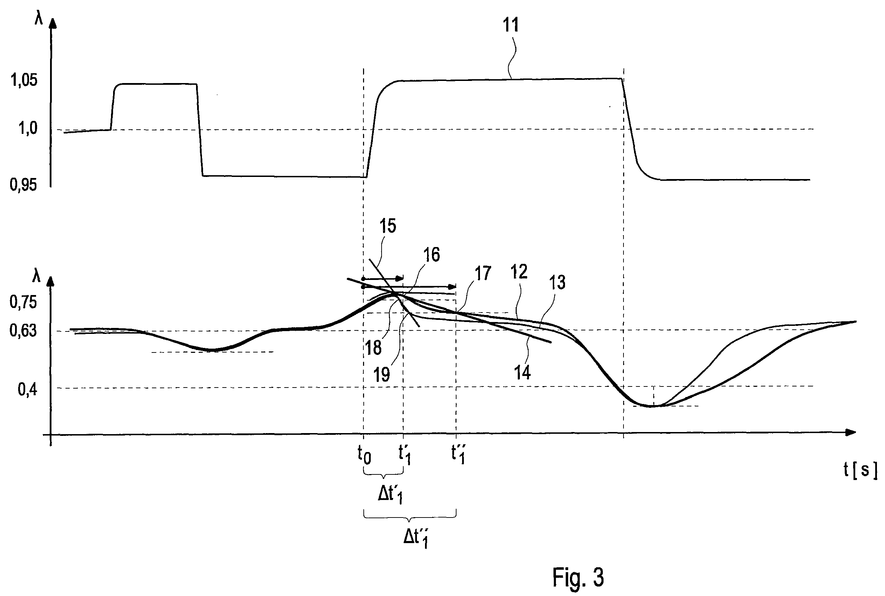

Die Figur 3 zeigt ein Diagramm, in welchem die Signalwerte zweier Lambdasonden über der Zeit aufgetragen sind, wobei ein Verlauf 11 die Signalwerte der stromaufwärts des Katalysators 2 angeordneten Lambdasonde 5 und Verläufe 12 und 13 die der stromabwärts des Katalysators 2 befindlichen Lambdasonde 6 wiedergeben. Der Verlauf 12 zeigt eine langsame Verringerung des Signalwerts nach dem Erreichen eines Maximums nach dem Zeitpunkt $t_0$, während der Verlauf 13 eine schnellere Verringerung aufweist. Entsprechend ist eine Gerade 14, welche die Steigung des Verlaufs 12 wiedergibt, flacher als eine Gerade 15, die die Steigung des Verlaufs 13 wiedergibt. Die Steigungen 14 und 15 werden anhand der Signalwerte und den korrespondierenden Zeitpunkten bestimmt, die durch die Bezugszeichen 16 und 17 beziehungsweise 18 und 19 angedeutet sind. Aus den Steigungen 14 und 15 werden nun entsprechende Zeitkonstanten $\tau$ bestimmt und - wie vorstehend beschrieben - zur Korrektur des jeweils festgestellten Zeitraumendes $t'_1$ (Verlauf 13) beziehungsweise $t''_1$ (Verlauf 12) herangezogen.

**BEZUGSZEICHENLISTE**

| | |
|---|---|
| 1 | Abgasreinigungseinrichtung |
| 2 | Katalysator |
| 3 | Abgasleitung |
| 4 | Pfeil |
| 5 | Lambdasonde |
| 6 | Lambdasonde |
| 7 | Verlauf |
| 8 | Verlauf |
| 9 | Verlauf |
| 10 | Verlauf |
| 11 | Verlauf |
| 12 | Verlauf |
| 13 | Verlauf |
| 14 | Gerade |
| 15 | Gerade |
| 16 | Signalwert |
| 17 | Signalwert |
| 18 | Signalwert |
| 19 | Signalwert |

**Patentansprüche**

1. Verfahren zum Betreiben einer Abgasreinigungseinrichtung (1) mit wenigstens einem Katalysator (2) zum Filtern von Abgas, der einem Abgastrakt einer Brennkraftmaschine zugeordnet ist, und mit zumindest einer in dem Abgas angeordneten Lambdasonde (5,6), wobei ein Zeitraum bestimmt wird, um welchen die Reaktion der Lambdasonde (5,6) gegenüber einem Einstellen eines anderen Kraftstoff-Luft-Gemischs an der Brennkraftmaschine verzögert ist, wobei ein Zeitraumende ($t_0, t_1$), das einem Maximum beziehungsweise Minimum eines von der Lambdasonde (5,6) gelieferten, durch eine Verzögerung verzögerten Signalwerts ($\lambda$) zugeordnet ist, bestimmt wird, indem ein Variablenwert dem Signalwert ($\lambda$) nachgeführt wird, sodass der Variablenwert stets das Minimum beziehungsweise das Maximum des Signalwerts dargestellt, und bei einem Unterschreiten beziehungsweise Überschreiten des Variablenwerts durch den Signalwert ($\lambda$) um einen bestimmten Differenzwert ($\Delta\lambda$) das Zeitraumende ($t_0, t_1$) festgestellt wird, wobei das Zeitraumende ($t_0, t_1$) aufgrund der Zeitkonstante ($\tau$) der Verzögerung korrigiert wird, **dadurch gekennzeichnet**, das ein Korrekturwert ($\Delta t$) für das Zeitraumende ($t_0, t_1$) aus dem Differenzwert ($\Delta\lambda$) und der Zeitkonstante ($\tau$) bestimmt wird.

2. Verfahren nach Anspruch 1, **dadurch gekennzeichnet, dass** der Signalwert ($\lambda$) durch ein Filtern, eine Anordnung der Lambdasonde (5,6) in dem Abgas und/oder den Katalysator (2) verzögert wird.

3. Verfahren nach einem der vorhergehenden Ansprüche, **dadurch gekennzeichnet, dass** die Zeitkonstante ($\tau$) aus der Steigung des Signalwerts ($\lambda$) bestimmt wird.

4. Verfahren nach einem der vorhergehenden Ansprüche, **dadurch gekennzeichnet, dass** als Lambdasonde (5,6) eine binäre Lambdasonde verwendet wird.

5. Abgasreinigungseinrichtung (1), insbesondere zur Durchführung des Verfahrens nach einem oder mehren der vorhergehenden Ansprüche, mit wenigstens einem Katalysator (2) zur Filterung von Abgas, der einem Abgastrakt einer Brennkraftmaschine zugeordnet ist, und mit zumindest einer in dem Abgas angeordneten Lambdasonde (5,6), wobei Mittel vorgesehen sind, um einen Zeitraum zu bestimmen, um welchen die Reaktion der Lambdasonde (5,6) gegenüber einem Einstellen eines anderen Kraftstoff-Luft-Gemischs an der Brennkraftmaschine verzögert ist, und um ein Zeitraumende ($t_0, t_1$), das einem Maximum beziehungsweise Minimum eines von der Lambdasonde (5,6) gelieferten, durch eine Verzögerung verzögerten Signalwerts zugeordnet ist, zu bestimmen, indem ein Variablenwert dem Signalwert ($\lambda$) nachgeführt wird, sodass der Variablenwert stets das Minimum beziehungsweise das Maximum des Signalwerts darstellt, und bei einem Unterschreiten beziehungsweise Überschreiten des Variablenwerts durch den Signalwert ($\lambda$) um einen bestimmten Differenzwert ($\Delta\lambda$) das Zeitraumende ($t_0, t_1$) festgestellt wird, wobei die Mittel zusätzlich dazu vorgesehen sind, das Zeitraumende ($t_0, t_1$) aufgrund der Zeitkonstante ($\tau$) der Verzögerung zu korrigieren, **dadurch gekennzeichnet, dass** ein Korrekturwert ($\Delta t$) für das Zeitraumende ($t_0, t_1$) aus dem Differenzwert ($\Delta\lambda$) und der Zeitkonstante ($\tau$) bestimmt wird.

**Claims**

1. Method of operating an exhaust gas cleaning device (1) with at least one catalytic converter (2) for filtering exhaust gas assigned to the exhaust system of an internal combustion engine, and with at least one lambda probe (5, 6) arranged in the exhaust gas wherein a time period is determined by which the reaction of the lambda probe (5, 6) is delayed in relation to the setting of another fuel-air mix on the internal combustion engine, wherein a time period end ($t_0, t_1$), that is assigned to a maximum and minimum respectively of a signal value (A) delayed by a delay is determined, in that a variable value tracks the signal value ($\lambda$) so that the variable value always represents the maximum or minimum respectively of the signal value, and on the signal value ($\lambda$) falling below or exceeding the variable value by a determined difference value ($\Delta\lambda$) the time period end ($t_0, t_1$) is determined, wherein the time period end ($t_0, t_1$) is corrected on the basis of the time constant ($\tau$) of the delay, **characterised in that** a correction value ($\Delta t$) is determined for the period end ($t_0, t_1$) from the difference value ($\Delta\lambda$) and the time constant ($\tau$).

2. Method according to claim 1 **characterised in that** the signal value ($\lambda$) is delayed through filtering, an arrangement of the lambda probe (5, 6) in the exhaust and/or the catalytic converter (2)

3. Method according to any one of the preceding claims **characterised in that** the time constant ($\tau$) is determined from the gradient of the signal value ($\lambda$).

4. Method according to any one of the preceding claims **characterised in that** a binary lambda probe is used as the lambda probe (5, 6).

5. Exhaust gas cleaning device (1), more particularly for implementing the method according to one or more of the preceding claims, with at least one catalytic converter (2) for filtering exhaust gas, which is arranged in an exhaust system of an internal combustion engine, and with at least one lambda probe (5, 6) arranged in the exhaust, wherein means are provided for determining a period of time by which the reaction of the lambda probe (5, 6) is delayed in relation to a setting of another fuel-air mixture on the internal combustion engine, and for determining a time period end $(t_0, t_1)$ that is assigned to a maximum and minimum respectively of a signal value delivered by the lambda probe (5, 6) that is delayed by a delay, in that a variable value tracks the signal value (A) so that the signal value always represents the minimum and maximum respectively of the signal value, and on the signal value $(\lambda)$ falling below or exceeding the variable value by a determined difference value $(\Delta\lambda)$ the time period end $(t_0, t_1)$ is determined, wherein the means are also provided to correct the time period end $(t_0, t_1)$ on the basis of the time constant $(\tau)$ of the delay, **characterised in that** a correction value (At) is determined for the period end $(t_0, t_1)$ from the difference value $(\Delta\lambda)$ and the time constant $(\tau)$.

**Revendications**

1. Procédé de fonctionnement d'un dispositif de dépollution de gaz d'échappement (1) avec au moins un catalyseur (2) qui est destiné à filtrer un gaz d'échappement et qui est associé à une voie de gaz d'échappement d'un moteur à combustion interne et avec au moins une sonde lambda (5, 6) agencée dans le gaz d'échappement, selon lequel on détermine un intervalle de temps pendant lequel la réaction de la sonde lambda (5, 6) est retardée par rapport à un réglage d'un autre mélange carburant-air au niveau du moteur à combustion interne, selon lequel on détermine une fin d'intervalle de temps $(t_0, t_1)$ qui est associée à un maximum respectivement à un minimum d'une valeur de signal (?) fournie par la sonde lambda (5, 6) et retardée par un retard en faisant en sorte qu'une valeur de variable suive la valeur de signal (?) de telle sorte que la valeur de variable représente toujours le minimum respectivement le maximum de la valeur de signal et selon lequel, lorsque la valeur de signal (?) devient inférieure respectivement supérieure à la valeur de variable, on fixe la fin d'intervalle de temps $(t_0, t_1)$ avec une valeur de différence déterminée $(\Delta?)$, la fin d'intervalle de temps $(t_0, t_1)$ étant corrigée sur la base de la constante de temps (t) du retard, **caractérisé en ce que** l'on détermine une valeur de correction $(\Delta t)$ pour la fin d'intervalle de temps $(t_0, t_1)$ à partir de la valeur de différence $(\Delta?)$ et de la constante de temps (t).

2. Procédé selon la revendication 1, **caractérisé en ce que** la valeur de signal (?) est retardée par un filtrage, un agencement de la sonde lambda (5, 6) dans le gaz d'échappement et/ou le catalyseur (2).

3. Procédé selon l'une des revendications précédentes, **caractérisé en ce que** la constante de temps (t) est déterminée à partir de la pente de la valeur de signal (?).

4. Procédé selon l'une des revendications précédentes, **caractérisé en ce qu'**une sonde lambda binaire est utilisée comme sonde lambda (5, 6).

5. Dispositif de dépollution de gaz d'échappement (1), notamment pour la mise en oeuvre du procédé selon une ou plusieurs des revendications précédentes, avec au moins un catalyseur (2) qui est destiné à filtrer un gaz d'échappement et qui est associé à une voie de gaz d'échappement d'un moteur à combustion interne et avec au moins une sonde lambda (5, 6) agencée dans le gaz d'échappement, des moyens étant prévus pour déterminer un intervalle de temps pendant lequel la réaction de la sonde lambda (5, 6) est retardée par rapport à un réglage d'un autre mélange carburant-air au niveau du moteur à combustion interne et pour déterminer une fin d'intervalle de temps $(t_0, t_1)$ qui est associée à un maximum respectivement à un minimum d'une valeur de signal (?) fournie par la sonde lambda (5, 6) et retardée par un retard en faisant en sorte qu'une valeur de variable suive la valeur de signal (?) de telle sorte que la valeur de variable représente toujours le minimum respectivement le maximum de la valeur de signal et, lorsque la valeur de signal (?) devient inférieure respectivement supérieure à la valeur de variable, pour fixer la fin d'intervalle de temps $(t_0, t_1)$ avec une valeur de différence déterminée $(\Delta?)$, les moyens étant aussi prévus pour corriger la fin d'intervalle de temps $(t_0, t_1)$ sur la base de la constante de temps (t) du retard, **caractérisé en ce qu'**une valeur de correction $(\Delta t)$ pour la fin d'intervalle de temps $(t_0, t_1)$ est déterminée à partir de la valeur de différence $(\Delta?)$ et de la constante de temps (t).

# EP 2 791 494 B1

Fig. 1

Fig. 2

9

Fig. 3

EP 2 791 494 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008042549 A